# EUROPÄISCHE PATENTSCHRIFT

(11) **EP 1 737 692 B1**
(45) Veröffentlichungstag und Bekanntmachung des Hinweises auf die Patenterteilung: **09.07.2008**
(21) Anmeldenummer: 05736056.2
(22) Anmeldetag: 19.04.2005
(51) Int. Cl.: B60J 10/00, B60J 10/04, B29C 45/14

(54) **VERFAHREN ZUM HERSTELLEN EINES DICHT-ODER ZIERSTREIFENS, INSBESONDERE FÜR EIN KRAFTFAHRZEUG, SOWIE EIN SOLCHER DICHT-ODER ZIERSTREIFEN**
METHOD FOR PRODUCING A SEALING OR DECORATIVE STRIP, IN PARTICULAR, FOR A MOTOR VEHICLE AND SAID SEALING OR DECORATIVE STRIP
PROCEDE DE FABRICATION D'UNE BANDE D'ETANCHEITE OU DECORATIVE, EN PARTICULIER POUR UN VEHICULE AUTOMOBILE, ET BANDE D'ETANCHEITE OU DECORATIVE DE CE TYPE

(30) Priorität: 20.04.2004 DE 102004019115
(43) Veröffentlichungstag der Anmeldung: 03.01.2007
(73) Patentinhaber: Metzeler Automotive Profile Systems GmbH, 88131 Lindau/Bodensee (DE)
(72) Erfinder: HOCHHOLZER, Eckehard, 88239 Wangen (DE); SEIDEL, Ulrich, D-88138 Niederstaufen (DE); TAUBE, Michael, D-88131 Lindau (DE)
(74) Vertreter: Schober, Christoph D.
(86) Internationale Anmeldenummer: PCT/EP2005/051726
(87) Internationale Veröffentlichungsnummer: WO 2005/102758

(56) Entgegenhaltungen:
- EP-A- 0 273 769
- EP-A- 0 980 778
- US-A- 4 719 067
- US-A- 4 874 651

## Beschreibung

Die Erfindung betrifft ein Verfahren zum Herstellen eines Dicht- oder Zierstreifens. Die Erfindung bezieht sich ferner auf einen Dicht- oder Zierstreifen, der insbesondere für ein Kraftfahrzeug Anwendung findet. Der Dicht- oder Zierstreifen ist mit einem ersten Bauteil, das aus einem elastomeren Werkstoff extrudiert ist und einen Endabschnitt aufweist, und einem zweiten Bauteil, das stoffschlüssig mit dem Endabschnitt verbunden ist, versehen. Der Endabschnitt weist eine Oberseite und eine Unterseite, die sich in einer Längsrichtung erstrecken, und eine Stirnseite, die sich in einer Querrichtung erstreckt, auf. Die Stirnseite bildet zumindest einen Teil einer Fügefläche, an der das erste Bauteil und das zweite Bauteil aneinandergrenzen. Der Endabschnitt ist zur Vergrösserung der Fügefläche mit einer Aussparung versehen. Das zweite Bauteil weist einen Vorsprung auf, der in die Aussparung eingreift.

Die DE 36 11 283 C1 beschreibt eine Dichtung für ein Cabriolet-Verdeck, die sich aus zwei Dichtungsabschnitten zusammensetzt. Die Dichtungsabschnitte sind mittels eines Haltestifts an einer Haltschiene befestigt und weisen Stirnseiten auf, die aneinander zugewandt sind. An der Stirnseite des ersten Dichtungsabschnitts ist eine Kugelpfanne angeordnet, die mit einer konkaven Kontaktfläche versehen ist. Demgegenüber ist an der Stirnseite des zweiten Dichtungsabschnitts ein Endstück angeordnet, das ein konvexe Kontaktfläche aufweist, die an die Kontaktfläche der Stirnseite des ersten Dichtungsabschnitts angepasst ist. Die Kugelpfanne und das Endstück bilden auf diese Weise ein Gelenk, das es ermöglicht, die Dichtungsabschnitte in einem Winkel anzuordnen und damit an einen gekrümmten Verlauf des Cabriolet-Verdecks anzupassen. Die Kugelpfanne und das Endstück können in einen Hohlraum der Dichtungsabschnitte eingesetzt oder durch Kleben, Vulkanisieren oder dergleichen mit den Dichtungsabschnitten verbunden werden.

Eine Dichtungsanordnung, die zum Abdichten und Führen einer bewegbaren Fensterscheibe eines Kraftfahrzeugs dient, wird in der EP 0 704 597 A2 beschrieben. Die Dichtungsanordnung weist einen Dichtstreifen auf, der aus einem elastomeren Werkstoff extrudiert ist und an einer die Fensterscheibe einfassenden Einfassung befestigt ist. Die Einfassung setzt sich aus einem Schachtabschnitt, der im Bereich eines Fensterschachts, in den sich die Fensterscheibe versenken lässt, angeordnet ist, einem Führungsabschnitt, der die Fensterscheibe seitlich führt, und einem Aufnahmeabschnitt, der die Oberkante der Fensterscheibe aufnimmt, zusammen. Der Dichtstreifen bildet eine geschlossene Rahmendichtung, die sich entlang des Schachtabschnitts, des Führungsabschnitts und des Aufnahmeabschnitts erstreckt. Der Dichtstreifen weist einen ersten Endabschnitt und einen zweiten Endabschnitt auf. Der erste Endabschnitt ist innerhalb des Fensterschachts angeordnet. Der zweite Endabschnitt überlappt den Dichtstreifen in einem Übergangsbereich von dem Führungsabschnitt auf den Schachtabschnitt. Im Unterschied zu dem ersten Endabschnitt ist der zweite Endabschnitt von aussen sichtbar und aus diesem Grund mit einer Endkappe versehen, die den Dichtstreifen abschliesst.

Die US 4,719,067 beschreibt auch das Verfahren zum Herstellen eines Dicht- oder Zierstreifens mit einer Endkappe, und zeigt den Oberbegrift der Ansprüche 1 und 6.

Die Endkappe wird üblicherweise durch Spritzgiessen gefertigt und dabei stoffschlüssig mit dem Dichtstreifen verbunden. Als nachteilig hat sich hierbei eine beim Erkalten der Endkappe auftretende Schwindung herausgestellt, die das optische Erscheinungsbild der Dichtung beeinträchtigende Einfallstellen hervorruft. Auf Grund der Einfallstellen ist die Herstellung der Dichtung mit einer verhältnismässig hohen Ausschussquote verbunden.

Das zuvor beschriebene Problem des Auftretens von unerwünschten Einfallstellen ergibt sich nicht nur bei der Herstellung einer geschlossenen Rahmendichtung, sondern generell dann, wenn ein erstes Bauteil mit einem zweiten Bauteil durch Spritzgiessen verbunden wird.

Der Erfindung liegt die **Aufgabe** zugrunde, ein Verfahren zum Herstellen eines Dicht- oder Zierstreifens zu schaffen, durch das sich die Bildung von Einfallstellen vermeiden lässt. Zudem soll ein entsprechender Dicht- oder Zierstreifen angegeben werden.

Zur **Lösung** dieser Aufgabe wird in Übereinstimmung mit Anspruch 1 ein Verfahren zum Herstellen eines Dicht- oder Zierstreifens, der ein erstes Bauteil und ein zweites Bauteil aufweist, die stirnseitig aneinandergrenzen, vorgeschlagen, das folgende Verfahrensschritte aufweist:
a) Extrudieren eines ersten Bauteils aus einem ersten Werkstoff;
b) Versehen des ersten Bauteils mit einem Endabschnitt, der eine Oberseite, eine Unterseite und eine Stirnseite aufweist;
c) Versehen des Endabschnitts mit einem Hohlraum, der sich im Inneren des ersten Bauteils erstreckt und an der Stirnseite mündet;
d) Spritzgiessen eines zweiten Bauteils mittels einer Formmasse, die aus einem zweiten Werkstoff besteht,
e) wobei während des Spritzgiessens das erste Bauteil an der Stirnseite stoffschlüssig mit dem zweiten Bauteil verbunden wird und die Formmasse in den Hohlraum eindringt, dadurch gekennzeichnet, dass
f) die sich in dem Hohlraum befindende Formmasse zur Bildung eines eine Schwindung des zweiten Bauteils während des Abkülens kompensierenden Speisers durch das erste Bauteil thermisch isoliert wird.

Weiterhin ist zur **Lösung** der oben genannten Aufgabe bei einem Dicht- oder Zierstreifen der eingangs genannten Art in Übereinstimmung mit Anspruch 6 erfindungsgemäss vorgesehen, dass das zweite Bauteil durch Spritzgießen gefertigt ist und der Vorsprung aus einer während des Spritzgießens in den Hohlraum eindringenden Formmasse gebildet ist, gekennzeichnet durch eine nach dem Abkühlen des zweiten Bauteils in dem Hohlraum verbleibende Höhlung, die sich aufgrund der kompensation einer Schwindung des zweiten Bauteils während des Abkühlens durch den sich in dem Hohlraum befindenden Vorsprung ergibt.

Der Erfindung liegt die Erkenntnis zugrunde, dass sich der Hohlraum beim Spritzgiessen mit Formmasse füllt, die einen in den Hohlraum hineinragenden Vorsprung bildet. Die sich in dem Hohlraum befindende Formmasse erfährt durch das erste Bauteil eine thermische Isolierung mit der Folge, dass sich der Vorsprung beim Erkalten weniger abkühlt als der Rest des zweiten Bauteils. Die sich in dem Hohlraum befindende Formmasse wirkt demzufolge als Speiser, der eine Schwindung des zweiten Bauteils kompensiert und damit das Auftreten von Einfallstellen verhindert.

Die Grösse des Hohlraums ist so bemessen, dass nach dem Erkalten noch Formmasse in dem Hohlraum verbleibt. Auf diese Weise ist sichergestellt, dass zum einen eine Schwindung des zweiten Bauteils durch Herausziehen von Formmasse aus dem Hohlraum vollständig kompensiert wird und zum anderen nach dem Erkalten ein Vorsprung in dem Hohlraum verbleibt. Der Vorsprung vergrössert die wirksame Fügefläche und trägt somit zu einer zuverlässigen Verbindung von erstem Bauteil und zweitem Bauteil bei. In Abhängigkeit von der Orientierung des Hohlraums kann der Vorsprung zudem einen Formschluss zwischen dem ersten Bauteil und dem zweiten Bauteil bewirken.

Vorteilhafte Ausgestaltungen der Erfindung werden in den Ansprüchen 2 bis 5 und 7 bis 9 definiert.

So ist es in Hinsicht auf eine einfache und kostengünstige Herstellung von Vorteil, den Hohlraum durch Bohren oder Fräsen zu fertigen.

Bevorzugt ist der erste Werkstoff Ethylen-Propylen-Dien-Kautschuk (EPDM) oder ein thermoplastisches Elastomer (TPE), um ein praxisgerechtes Extrudieren zu gewährleisten. Demgegenüber handelt es sich bei dem zweiten Werkstoff zweckmässigerweise um einen thermoplastischen Kunststoff, vorzugsweise TPE, der ein praxisgerechtes Spritzgiessen ermöglicht.

Der Hohlraum verläuft vorteilhafterweise parallel zur Oberseite und/oder Unterseite des ersten Bauteils. Vor allem dann, wenn sich der Hohlraum annähernd orthogonal zu der Stirnseite erstreckt, ergibt sich ein gleichmässiges Füllen des Hohlraum während des Spritzgiessens und ein ungehindertes Herausziehen von Formmasse aus dem Hohlraum während des anschliessenden Erkaltens. In diesem Zusammenhang hat es sich ferner als vorteilhaft erwiesen, wenn der Hohlraum im Querschnitt rund, vorzugsweise oval, ist.

In einer bevorzugten Ausgestaltung der Erfindung ist das erste Bauteil eine Dichtung und das zweite Bauteil eine die Dichtung an dem Endabschnitt abschliessende Endkappe.

Einzelheiten und weitere Vorteile der vorliegenden Erfindung ergeben sich aus der nachfolgenden Beschreibung zweier bevorzugter Ausführungsbeispiele. In den die Ausführungsbeispiele lediglich schematisch darstellenden Zeichnungen veranschaulichen im einzelnen:
- Fig. 1: eine Seitenansicht eines Kraftfahrzeugs;
- Fig. 2: einen Schnitt gemäss der Linie II in Fig. 1, der eine erste Ausführungsform einer Dichtung zeigt;
- Fig. 3: eine perspektivische Ansicht einer zweiten Ausführungsform der Dichtung und
- Fig. 4: eine perspektivische Ansicht gemäss Fig. 3, welche die mit einer Endkappe versehene Dichtung zeigt.

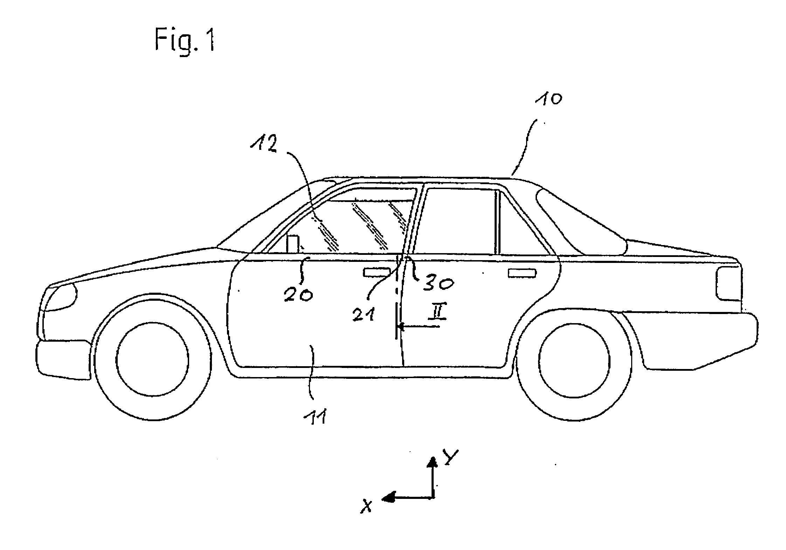

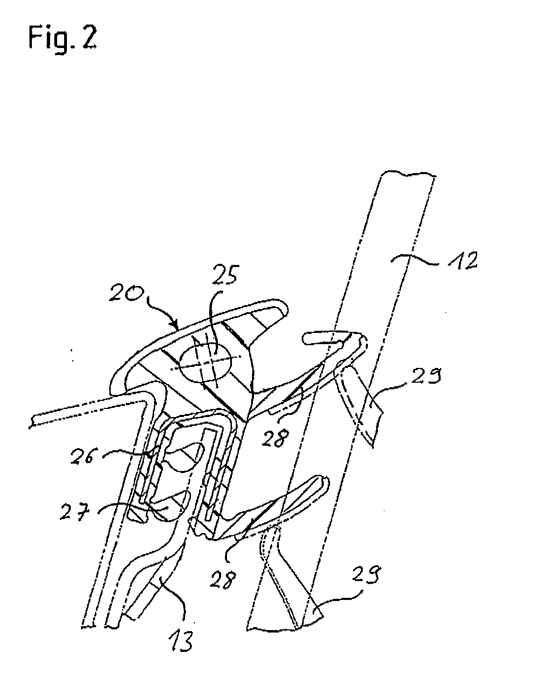

Das in Fig. 1 gezeigte Kraftfahrzeug 10 ist im Bereich einer Tür 11 mit einer durch einen Elektromotor angetriebenen Fensterscheibe 12 versehen. Die Fensterscheibe 12 lässt sich in einen Fensterschacht der Tür 11 versenken. Wie insbesondere aus Fig. 2 ersichtlich ist, wird die Fensterscheibe 12 entlang der Öffnung des Fensterschachts durch eine Dichtung 20 abgedichtet.

Die Dichtung 20 ist aus einem elastomeren Werkstoff, beispielsweise EPDM, extrudiert und weist einen im Querschnitt annähernd U-förmigen Befestigungsabschnitt auf. Der Befestigungsabschnitt ist auf einen äusseren Flansch 13 des Fensterschachts aufgesteckt und wird durch einen metallenen Verstärkungsträger 26 armiert. Zudem weist der Befestigungsabschnitt Haltelippen 27 auf, die eine zuverlässige Befestigung der Dichtung 20 an dem Flansch 13 gewährleisten. Die Dichtung 20 weist ausserdem Dichtlippen 28 auf, die an einer Aussenfläche der Fensterscheibe 12 anliegen und auf Grund der bewegbaren Anordnung der Fensterscheibe 12 mit einer reibungsvermindernden Beschichtung oder Beflockung versehen sind. Fig. 2 gibt überdies zu erkennen, dass an einer Innenfläche der Fensterscheibe 12 Dichtlippen 29 anliegen, die Bestandteil einer nicht dargestellten Dichtung, die den Fensterschacht von innen abdichtet, sind.

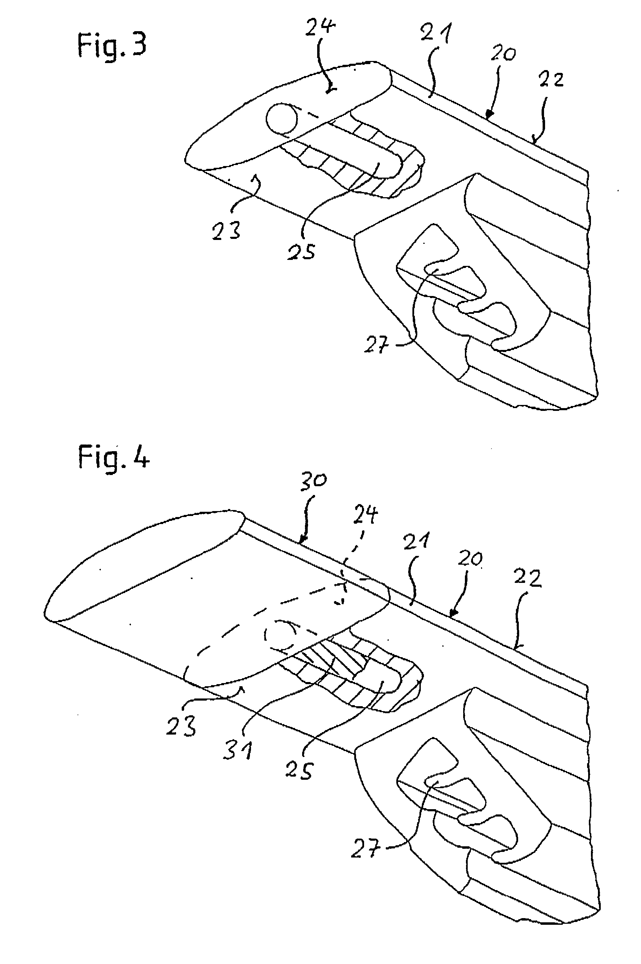

Weiterhin ist die Dichtung 20 im Bereich eines Endabschnitts 21 mit einem Hohlraum 25 versehen, der im Querschnitt oval ist. Im Unterschied hierzu weist der Hohlraum 25 bei der in den Fig. 3 und 4 gezeigten Ausführungsform der Dichtung 20 einen kreisförmigen Querschnitt auf. Die Fig. 3 und 4 geben zudem zu erkennen, dass der Endabschnitt 21 eine Oberseite 22, eine Unterseite 23 und eine Stirnseite 24 aufweist. Die Oberseite 22 und die Unterseite 23 erstrecken sich in einer Längsrichtung x, wohingegen sich die Stirnseite 24 in einer Querrichtung y, die orthogonal zu der Längsrichtung x ist, erstreckt. Der beispielsweise durch Bohren gefertigte Hohlraum 25 verläuft im wesentlichen parallel zur Oberseite 22 und zur Unterseite 23.

Wie insbesondere Fig. 4 zu erkennen gibt, ist an dem Endabschnitt 21 eine die Dichtung 20 abschliessende Endkappe 30 angeordnet. Die aus einer Formmasse, die beispielsweise aus TPE, PE oder ebenfalls aus EPDM besteht, spritzgegossene Endkappe 30 ist stoffschlüssig mit dem Endabschnitt 21 verbunden und grenzt an die Stirnseite 24 an. Formmasse, die beim Spritzgiessen der Endkappe 30 in den Hohlraum 25 eindrang, bildet einen in den Hohlraum 25 hineinragenden Vorsprung 31, wie in Fig. 4 zu erkennen ist. Die Innenfläche des Hohlraums 25 bildet folglich zusammen mit der Stirnseite 24 eine Fügefläche zwischen der Dichtung 20 und der Endkappe 30. Im Unterschied zu herkömmlichen Dichtungen vergrössert die Innenfläche des Hohlraums 25 die wirksame Fügefläche und trägt somit zu einem zuverlässigen Stoffschluss zwischen der Dichtung 20 und der Endkappe 30 bei.

Die zuvor beschriebene Dichtung zeichnet sich durch ein optisches Erscheinungsbild der Endkappe 30 aus, das frei von in ästhetischer Hinsicht störenden Einfallstellen ist. Dies ist darauf zurückzuführen, dass während des Spritzgiessens der Endkappe 30 Formmasse in den Hohlraum 25 eindringt, die auf Grund der thermischen Isolierung durch die Dichtung 20 beim anschliessenden Erkalten weniger abkühlt als der Rest der Endkappe 30. Die sich in dem Hohlraum 25 befindende Formmasse wirkt auf diese Weise als Speiser, der eine Schwindung der Endkappe 30 kompensiert und damit das Auftreten von Einfallsstellen verhindert.

### Bezugszeichenliste

- 10: Kraftfahrzeug
- 11: Tür
- 12: Fensterscheibe
- 13: Flansch

- 20: Dichtung
- 21: Endabschnitt
- 22: Oberseite
- 23: Unterseite
- 24: Stirnseite
- 25: Hohlraum
- 26: Verstärkungsträger
- 27: Haltelippe
- 28: Dichtlippe
- 29: Dichtlippe

- 30: Endkappe
- 31: Vorsprung

- x: Längsrichtung
- y: Querrichtung

## Patentansprüche

1. Verfahren zum Herstellen eines Dicht- oder Zierstreifens, insbesondere für ein Kraftfahrzeug (10), der ein erstes Bauteil (20) und ein zweites Bauteil (30) aufweist, die stirnseitig aneinandergrenzen, mit folgenden Verfahrensschritten:
a) Extrudieren eines ersten Bauteils (20) aus einem ersten Werkstoff;
b) Versehen des ersten Bauteils (20) mit einem Endabschnitt (21), der eine Oberseite (22), eine Unterseite (23) und eine Stirnseite (24) aufweist;
c) Versehen des Endabschnitts (21) mit einem Hohlraum (25), der sich im Inneren des ersten Bauteils (20) erstreckt und an der Stirnseite (24) mündet;
d) Spritzgiessen eines zweiten Bauteils (30) mittels einer Formmasse, die aus einem zweiten Werkstoff besteht,
e) wobei während des Spritzgiessens das erste Bauteil (20) an der Stirnseite (24) stoffschlüssig mit dem zweiten Bauteil (30) verbunden wird und die Formmasse in den Hohlraum (25) eindringt **dadurch gekennzeichnet, dass**
f) die sich in dem Hohlraum (25) befindende Formmasse zur Bildung eines eine Schwindung des zweiten Bauteils (30) während des Abkühlens kompensierenden Speisers durch das erste Bauteil (20) thermisch isoliert wird.

2. Verfahren nach Anspruch 1, **dadurch gekennzeichnet, dass** der Hohlraum (25) durch Bohren oder Fräsen gefertigt wird.

3. Verfahren nach Anspruch 1 oder 2, **dadurch gekennzeichnet, dass** der erste Werkstoff Ethylen-Propylen-Dien-Kautschuk oder ein thermoplastisches Elastomer ist.

4. Verfahren nach einem der Ansprüche 1 bis 3, **dadurch gekennzeichnet, dass** der zweite Werkstoff ein thermoplastischer Kunststoff, vorzugsweise ein thermoplastisches Elastomer, ist.

5. Verfahren nach einem der Ansprüche 1 bis 4, **dadurch gekennzeichnet, dass** das erste Bauteil als Dichtung (20) und das zweite Bauteil als eine die Dichtung (20) an dem Endabschnitt (21) abschliessende Endkappe (30) ausgestaltet wird.

6. Dicht- oder Zierstreifen, insbesondere für ein Kraftfahrzeug (10), mit einem ersten Bauteil (20), das aus einem elastomeren Werkstoff extrudiert ist und einen Endabschnitt (21) aufweist, und einem zweiten Bauteil (30), das stoffschlüssig mit dem Endabschnitt (21) verbunden ist, wobei der Endabschnitt (21) eine Oberseite (22) und eine Unterseite (23), die sich in einer Längsrichtung (x) erstrecken, und eine Stirnseite (24), die sich in einer Querrichtung (y) erstreckt, aufweist, wobei die Stirnseite (24) zumindest einen Teil einer Fügefläche, an der das erste Bauteil (20) und das zweite Bauteil (30) aneinandergrenzen, bildet, wobei der Endabschnitt (21) mit einem Hohlraum (25) versehen ist, der sich im Inneren des ersten Bauteils (20) erstreckt und an der Stirnseite (24) mündet, wobei das zweite Bauteil (30) einen Vorsprung (31) aufweist, der in den Hohlraum (25) hineinragt, und wobei das zweite Bauteil (30) durch Spritzgiessen gefertigt ist und der Vorsprung (31) aus einer während des Spritzgiessens in den Hohlraum (25) eindringenden Formmasse gebildet ist, **gekennzeichnet durch** eine nach dem Abkühlen des zweiten Bauteils (30) in dem Hohlraum (25) verbleibende Höhlung, die sich aufgrund der Kompensation einer Schwindung des zweiten Bauteils (30) während des Abkühlens **durch** den sich in dem Hohlraum (25) befindenden Vorsprung (31) ergibt.

7. Dicht- oder Zierstreifen nach Anspruch 6, **dadurch gekennzeichnet, dass** der Hohlraum (25) parallel zur Oberseite (22) und/oder Unterseite (23) des ersten Bauteils (20) verläuft.

8. Dicht- oder Zierstreifen nach Anspruch 6 oder 7, **dadurch gekennzeichnet, dass** der Hohlraum (25) im Querschnitt rund, vorzugsweise oval, ist.

9. Dicht- oder Zierstreifen nach einem der Ansprüche 6 bis 8, **dadurch gekennzeichnet, dass** das erste Bauteil eine Dichtung (20) und das zweite Bauteil eine die Dichtung (20) an dem Endabschnitt (21) abschliessende Endkappe (30) ist.

## Claims

1. A method for producing a sealing or decorative strip, in particular, for a motor vehicle (10), said strip comprising a first component (20) and a second component (30) which are adjacent on the front side, comprising the steps of
a) extruding a first component (20), made of a first material;
b) providing the first component (20) with an end section (21), having an upper side (22), a lower side (23) and a front side (24);
c) providing the end section (21) with a cavity (25) which extends inside the first component (20) and opens on the front side (24);
d) injection moulding the second component (30) by means of a moulding mass, made of a second material,
e) whereby, during injection moulding, the first component (20) is joined to the second component (30) by a material fit on the front side and the moulding mass enters the cavity (25), **characterized in that**
f) the moulding mass in the cavity is thermally insulated by the first component (20) to form a feeder compensating shrinkage of the second component (30) during cooling.

2. The method as set forth in claim 1, **characterized in that** the cavity (25) is produced by drilling or milling.

3. The method as set forth in claim 1 or 2, **characterized in that** the first material is ethylene-propylen-dien rubber or a thermoplastic elastomer.

4. The method as set forth in any of the claims 1 to 3, **characterized in that** the second material is a thermoplastic, preferably a thermoplastic elastomer.

5. The method as set forth in any of the claims 1 to 4, **characterized in that** the first component is configured as a seal (20) and the second component as an end cap (30) closing off the seal (20) at the end section (21).

6. A sealing or decorative strip, in particular, for a motor vehicle (10), including a first component (20) extruded from an elastomeric material and comprising an end section (21), and a second component (30) joined by a material fit to the end section (21), the end section (21) comprising an upper side (22) and a lower side (23) extending in a longitudinal direction (x), and a front side (24) extending in a transverse direction (y), the front side (24) forming at least a part of the jointing surface interfacing the first component (20) and the second component (30), the end section (21) featuring a cavity (25) extending in the interior of the first component (20) and merging at the front side (24), the second component (30) comprising a protuberance (31) protruding into the cavity (25) and the second component (30) being made by injection moulding and the protuberance (31) being formed from a moulding mass entering the cavity (25) during injection moulding, **characterized by** a hollow remaining in the cavity (25) after cooling of the second component (30), the hollow materializing from the protuberance (31) in the cavity (25) due to compensating a shrinkage of the second component (30) during cooling.

7. The sealing or decorative strip as set forth in claim 6, **characterized in that** the cavity (25) is oriented parallel to the upper side (22) and/or lower side (23) of the first component (20).

8. The sealing or decorative strip as set forth in claim 6 or 7, **characterized in that** cross-sectionally the cavity (25) is round, preferably oval.

9. The sealing or decorative strip as set forth in any of the claims 6 to 8, **characterized in that** the first component is a seal (20) and the second component is an end cap (30) closing off the seal (20) at the end section (21).

## Revendications

1. Procédé de fabrication d'une bande d'étanchement ou de décoration, en particulier pour un véhicule automobile (10), qui comprend un premier composant (20) et un second composant (30), qui sont mutuellement juxtaposés du côté frontal, avec les étapes de procédé suivantes :
a) extrusion d'un premier composant (20) à partir d'un premier matériau ;
b) réalisation du premier composant (20) avec un tronçon terminal (21) qui présente une face supérieure (22), une face inférieure (23) et une face frontale (24) ;
c) réalisation dans le tronçon terminal (21) d'une cavité (25) qui s'étend à l'intérieur du premier composant (20) et qui débouche à la face frontale (24) ;
d) moulage par injection d'un second composant (30) au moyen d'une masse à modeler qui est constituée en un second matériau,
e) dans lequel, pendant le moulage par injection, le premier composant (20) est relié au niveau de la face frontale (24) par coopération de matière au second composant (30), et la masse à modeler pénètre dans la cavité (25),
**caractérisé en ce que**
f) la masse à modeler qui se trouve dans la cavité (25) est thermiquement isolée par le premier composant (20) pour former un accumulateur qui compense une rétraction du second composant (30) pendant le refroidissement.

2. Procédé selon la revendication 1, **caractérisé en ce que** la cavité (25) est réalisée par perçage ou par fraisage.

3. Procédé selon la revendication 1 ou 2, **caractérisé en ce que** le premier matériau est un caoutchouc éthylène-propylène-diène, ou un élastomère thermoplastique.

4. Procédé selon l'une des revendications 1 à 3, **caractérisé en ce que** le second matériau est une matière thermoplastique, de préférence un élastomère thermoplastique.

5. Procédé selon l'une des revendications 1 à 4, **caractérisé en ce que** le premier composant est conçu à la manière d'un joint (20), et le second composant est conçu à la manière d'un capuchon d'extrémité (30) qui referme le joint (20) au niveau du tronçon terminal (21).

6. Bande d'étanchement ou de décoration, en particulier pour un véhicule automobile (10), comprenant un premier composant (20) qui est extrudé à partir d'un matériau élastomère et qui présente un tronçon terminal (21), et un second composant (30) qui est relié au tronçon terminal (21) par coopération de matière, ledit tronçon terminal (21) comportant une face supérieure (22) et une face inférieure (23) qui s'étendent en direction longitudinale (x) et une face frontale (24) qui s'étend en direction transversale (y), ladite face frontale (24) formant au moins une partie d'une surface de jointure au niveau de laquelle le premier composant (20) et le second composant (30) sont mutuellement adjacents, ledit tronçon terminal (21) étant pourvu d'une cavité (21) qui s'étend à l'intérieur du premier composant (20) et qui débouche au niveau de la face frontale (24), dans laquelle le second composant (30) comporte une saillie (31) qui pénètre dans la cavité (25), et dans laquelle le second composant (30) est réalisé par moulage par injection et la saillie (31) est formée à partir d'une masse à modeler qui pénètre dans la cavité (25) pendant le moulage par injection, **caractérisée par** un creux, qui demeure dans la cavité (25) après le refroidissement du second composant (30) et qui se forme en raison de la compensation d'une rétraction du second composant (30) pendant le refroidissement du fait de la saillie (31) qui se trouve dans la cavité (25).

7. Bande d'étanchement ou de décoration selon la revendication 6, **caractérisée en ce que** la cavité (25) s'étend parallèlement à la face supérieure (22) et/ou à la face inférieure (23) du premier composant (20).

8. Bande d'étanchement ou de décoration selon la revendication 6 ou 7, **caractérisée en ce que** la cavité (25) a une section arrondie, de préférence ovale.

9. Bande d'étanchement ou de décoration selon l'une des revendications 6 à 8, **caractérisée en ce que** le premier composant est un joint (20) et le second composant est un capuchon d'extrémité (30) qui referme le joint (20) au niveau du tronçon terminal (21).
